# EUROPÄISCHE PATENTSCHRIFT

(11) **EP 0 904 907 B1**
(45) Veröffentlichungstag und Bekanntmachung des Hinweises auf die Patenterteilung: **10.09.2003**
(21) Anmeldenummer: 98810839.5
(22) Anmeldetag: 25.08.1998
(51) Int. Cl.: B28D 1/08, B23D 57/00

(54) **Seilsäge mit Seilspeicherrolle**
Wire saw with saw wire storage roller
Scie à fil à rouleau de stockage du fil de sciage

(30) Priorität: 09.09.1997 DE 19739523
(43) Veröffentlichungstag der Anmeldung: 31.03.1999
(73) Patentinhaber: HILTI Aktiengesellschaft, 9494 Schaan (LI)
(72) Erfinder: Gmeiner, Markus, 6800 Feldkirch (AT); Plattner, Josef, 6200 Gallzein (AT)
(74) Vertreter: Wildi, Roland

(56) Entgegenhaltungen:
- WO-A-95/18692
- DE-A- 3 209 164
- PATENT ABSTRACTS OF JAPAN vol. 1995, no. 11, 26. Dezember 1995 (1995-12-26) -& JP 07 227833 A (CONCRETE KOORING KK), 29. August 1995 (1995-08-29)

## Beschreibung

Die Erfindung betrifft eine Seilsägemaschine gemäss dem Oberbegriff des Patentanspruchs 1. Die Grundlage für den Oberbegriff bildet die JP-A-07227833.

Zur schneidenden Bearbeitung von Werkstücken aus Beton, Mauerwerk, Gestein oder dergleichen werden neben den bekannten Wandsägen, beispielsweise den Geräten der Anmelderin, in zunehmendem Masse auch Seilsägemaschinen eingesetzt. Eine Seilsägemaschine, wie sie beispielsweise in der WO 95/18692 beschrieben ist, besitzt eine Antriebseinheit, die entlang einer Führungsschiene relativ zum bearbeiteten Werkstück verschiebbar ist. Auf der Antriebseinheit ist ein Treibrad zum Antrieb des in einer geschlossenen Schleife geführten Sägeseils angeordnet. Das Sägeseil umschlingt das Treibrad über einen Grossteil seines Umfangs und erstreckt sich vom Treibrad bis zum Werkstück. Im Führungspfad des Sägeseils sind Umlenkrollen angeordnet, die die Umschlingung des Treibrads verbessern und bei Verschwenkbarkeit der Umlenkrollen eine Leitung des Seils in die gewünschte Richtung erlauben.

Das Sägeseil ist mit abrasiven Schneidkörpem bestückt, die beim kontinuierlichen Umlauf des Seils das Werkstück abrasiv bearbeiten und den gewünschten Schnitt erzeugen. Die Länge des Sägeseils ist auf die Antriebseinheit abgestimmt, damit im Betrieb keine unnötigen Seilschwingungen auftreten, die zu Schnittproblemen und einem übermässigen Verschleiss des Sägeseils führen können. Für den Trennvorgang ist nur derjenige Teil der Seillänge nutzbar, welcher der durch die Antriebseinheit gezogenen freien Seillänge entspricht. Aufgrund unterschiedlicher Wandstärken der bearbeiteten Werkstücke und spezieller Schnittausführungen, wie beispielsweise zwei Horizontal- und zwei Vertikalschnitten bei Türausschnitten, ist eine grosse nutzbare Seillänge erforderlich. Die nutzbare Seillänge ist zum Teil durch die Längsverschiebbarkeit der Antriebseinheit entlang der Führungsschiene veränderbar. Allerdings ist die Länge der Führungsschiene nicht beliebig wählbar. Aus Platzgründen ist man oftmals gezwungen, eine relativ kurze Führungsschiene von 2 bis 3 m einzusetzen. Ausserdem wird ein Teil der Längserstreckung der Führungsschiene für die Kompensation des Schneidfortschritts benötigt, damit die Sägeseilspannung im gewünschten Ausmass aufrechterhalten werden kann. Um die nutzbare Seillänge an die Erfordernisse anpassen zu können sind aus dem Stand der Technik Seilspeicher bekannt, bei denen das Sägeseil nach dem Flaschenzugprinzip über eine Anzahl starr und verschiebbar angeordneter Rollen geführt ist. Ein Beispiel eines derartigen Flaschenzug-Seilspeichers ist in der WO 95/18692 beschrieben. Dieser bekannte Seilspeicher ist in die Antriebseinheit für das Sägeseil integriert. Die nutzbare Seillänge ist einstellbar, indem der relative Abstand der verschiebbaren Rollen zu den starr angeordneten Rollen pneumatisch bzw. hydraulisch verändert wird. Die Lösung der Verstellbarkeit der nutzbaren Seillänge ist an Seilsägemaschinen angepasst, die eine speziell für den Antrieb eines Sägeseils bestimmte Antriebseinheit aufweisen.

Aus dem Stand der Technik ist es auch bekannt, die Antriebseinheiten für Wandsägeeinrichtungen für den Antrieb eines Sägeseils umzurüsten. Dazu wird an Stelle eines Sägeblatts ein Treibrad an den die Antriebseinheit bildenden Sägekopf angeflanscht. Das Sägeseil umschlingt in gewohnter Weise das Treibrad und wird unter Zwischenschaltung von Umlenkrollen zum bearbeiteten Werkstück geleitet. Die Bewegung des Sägekopfs entlang der Führungsschiene im Betrieb erfolgt in der von den Wandsägen her bekannten Art. Derartige adaptierte Seilsägemaschinen werden beispielsweise auch von der Anmelderin angeboten.

Um auch bei den aus umgerüsteten Wandsägen adaptierten Seilsägemaschinen eine Verstellbarkeit der nutzbaren Seillänge zu erzielen, sind aus dem Stand der Technik separat stellbare Seilspeicher bekannt, die gleichfalls nach dem Flaschenzugprinzip aufgebaut sind und deren Funktion auf der Verstellung des Abstands zwischen den starren und den verschiebbaren Rollen beruht. Ein derartiger Seilspeicher ist beispielsweise in der WO 95/28263 beschrieben. Dieser bekannte Seilspeicher wird zusätzlich zwischen die auf der Führungsschiene angeordnete Antriebseinheit und das bearbeitete Werkstück gestellt. Der zusätzliche, relativ grosse Platzbedarf für den externen Seilspeicher kann bei beengten Verhältnissen zu Schwierigkeiten führen. Der separate Seilspeicher ist auch relativ aufwendig in seiner Konstruktion. Dementsprechend stellt nachträgliche Ausrüstung der adaptierten Seilsägemaschine mit dem separaten Seilspeicher eine verhältnismässig teure Lösung für die Verstellbarkeit der nutzbaren Seillänge dar.

Aufgabe der vorliegenden Erfindung ist es daher, eine Sägeseilmaschine zu schaffen, die insbesondere bei Verwendung von zum Betreiben von Wandsägen bekannten Sägeköpfen als Antriebseinrichtung für das Sägeseil eine einfache und kostengünstige Möglichkeit der Verstellung der nutzbaren Seillänge bietet. Dabei soll der Platzbedarf der Sägeseilmaschine nicht wesentlich oder gar nicht vergrössert werden.

Diese Aufgaben werden erfindungsgemäss durch eine Sägeseilmaschine gelöst, die die Merkmale des Patentanspruchs 1 aufweist. Die erfindungsgemässe Seilsägemaschine zur schneidenden Bearbeitung von Werkstücken aus Beton, Mauerwerk, Gestein oder dergleichen mit einem mit abrasiven Schneidkörpem bestückten Sägeseil besitzt eine Antriebseinheit für das in einer geschlossenen Schleife geführte Sägeseil. Die Antriebseinheit ist entlang einer Führungsschiene oder dergleichen Führungseinrichtung relativ zu dem bearbeiteten Werkstück verschiebbar angeordnet. Die Antriebseinheit ist mit einem Treibrad zum Antrieb des in einer geschlossenen Schleife geführten Sägeseils ausgestattet, wobei das Sägeseil das Treibrad über einen Grossteil seines Umfangs umschlingt und sich vom Treibrad über zwischengeschaltete Umlenkrollen zum Werkstück erstreckt. An dem vom Werkstück abgewandten Endabschnitt der Führungsschiene ist eine Seilspeicherrolle angeordnet, die bei Miteinbezug in den Führungspfad des Sägeseils die sich vom Treibrad zum Werkstück erstreckende Seillänge verkürzt.

Durch die im Endabschnitt der Führungsschiene angeordnete Speicherrolle kann bei gleichbleibender Länge der Führungsschiene ein deutlich längeres Sägeseil eingesetzt werden. Die nutzbare Seillänge ist sehr einfach an die Erfordernisse anpassbar, indem die Führungsrolle in den Führungspfad des Sägeseils miteinbezogen wird oder ausgespart wird. Für den Fall, dass nur eine kurze freie Seillänge erforderlich ist, wird das Sägeseil einfach um die Speicherrolle geführt. Bei der erfindungsgemäss mit einer Speicherrolle ausgestatten Seilsägemaschine vergrössert sich die nutzbare Seillänge bei einer beispielsweisen Länge der Führungsschiene von zwei Metern von üblicherweise etwa drei Metern auf sieben Meter. Bei der derart ausgestatteten Seilsägemaschine reicht die Länge des Sägeseils für einen Grossteil der Anwendungen aus. Wegen der grösseren zur Verfügung stehenden Seillänge muss die Seilsägemaschine auch nicht mehr völlig exakt zu dem zu bearbeitenden Werkstück ausgerichtet werden. Verlängerungen der Führungsschiene können entfallen, womit unnötige Stillstandszeiten vermieden werden.

Für eine noch exaktere Anpassung der nutzbaren Seillänge an die jeweiligen Erfordernisse ist die Seilspeicherrolle entlang der Längserstreckung der Führungsschiene in unterschiedlichen Positionen befestigbar. Die genaue Anpassung der Seillänge an die Erfordernisse erweist sich von Vorteil für die Laufruhe der Seilsägemaschine. Dadurch wird der Verschleiss des Sägeseils noch weiter reduziert.

Anstelle einer Montage der Seilspeicherrolle von Hand in diskreten Abständen vom rückwärtigen Ende der Führungsschiene kann sie mit elektrischen oder hydraulischen Antrieben ausgestattet sein. Dabei sind die Antriebe für die Seilspeicherrolle elektrisch oder hydraulisch kontinuierlich entlang der Führungsschiene verschiebbar.

Die Führungsschiene ist vielfach auf wenigstens zwei Schienenböcken gelagert. In einer Variante der Erfindung kann die Seilspeicherrolle an einem der Schienenböcke vorgesehen sein. Die Seilspeicherrolle kann dabei bereits auf einem der Schienenböcke vormontiert sein. In diesem Fall muss der Anwender bloss den Schienenbock mit der montierten Seilspeicherrolle an dem vom Werkstück entfernteren Endabschnitt der Führungsschiene anordnen. In einer alternativen Ausführung der Erfindung wird die Schiene zunächst auf zwei erhöhten Schienenböcken gelagert. Danach wird ein weiterer konventioneller Schienenbock an die Schiene angesetzt und wird die Seilspeicherrolle daran befestigt. Diese Variante der erfindungsgemässen Anordnung der Seilspeicherrolle weist den Vorteil auf, dass der zusätzliche Schienenbock entlang der Schiene längsverschiebbar ist.

In einer alternativen Ausführungsvariante kann die Seilspeicherrolle schwenkbar angeordnet sein. Bei einer derart ausgestatteten Seilsägemaschine erfüllt die schwenkbare Speicherrolle gleichzeitig eine Umlenkfunktion.

Die Anordnung der Seilspeicherrolle im vom Werkstück abgewandten Endabschnitt der Führungsschiene ist mit Vorteil derart gewählt, dass der von den Umlenkrollen zur Seilspeicherrolle führende Sägeseilabschnitt, unabhängig von der jeweiligen Position der Antriebseinheit auf der Führungsschiene, seine relative Ausrichtung zur Führungsschiene im wesentlichen beibehält. Dadurch werden positionsabhängige Seilführungen vermieden und bestehen für den über die Speicherrolle geführten Abschnitt des Sägeseils während eines gesamten Schneidvorgangs, abgesehen vom Abstand zu dem Treibrad, gleichmässige geometrische Verhältnisse.

Während sich die erfindungsgemässe Modifikation für alle Arten von Seilsägemaschinen eignet, bietet sie insbesondere in Verbindung mit adaptierten Seilsägemaschinen, bei denen die Antriebseinheit der Kopf einer Wandsägeeinrichtung ist und das Treibrad an Stelle eines Sägeblatts an den Sägekopf angeflanscht ist, Vorteile. Während bei kompletten Seilsägesystemen die Seilspeicherung zur Anpassung der nutzbaren Seillänge vielfach bereits integral mit der Antriebseinrichtung geliefert wird, bietet die erfindungsgemässe Ausstattung einer adaptierten Seilsägemaschine eine besonders einfache, kostengünstige und platzsparende Lösung für die Variabilität der nutzbaren Seillänge.

Im folgenden wird die erfindungsgemässe Seilsägemaschine unter Bezugnahme auf in den Figuren schematisch dargestellten Ausführungsbeispiele näher erläutert. Es zeigen:
- Fig. 1: ein erstes Ausführungsbeispiel einer erfindungsgemässen Seilsägemaschine;
- Fig. 2: die Seilsägemaschine gemäss Fig. 1 mit in den Führungspfad des Sägeseils einbezogener Spreicherrolle; und
- Fig. 3: ein zweites Ausführungsbeispiel einer erfindungsgemässen Seilsägemaschine.

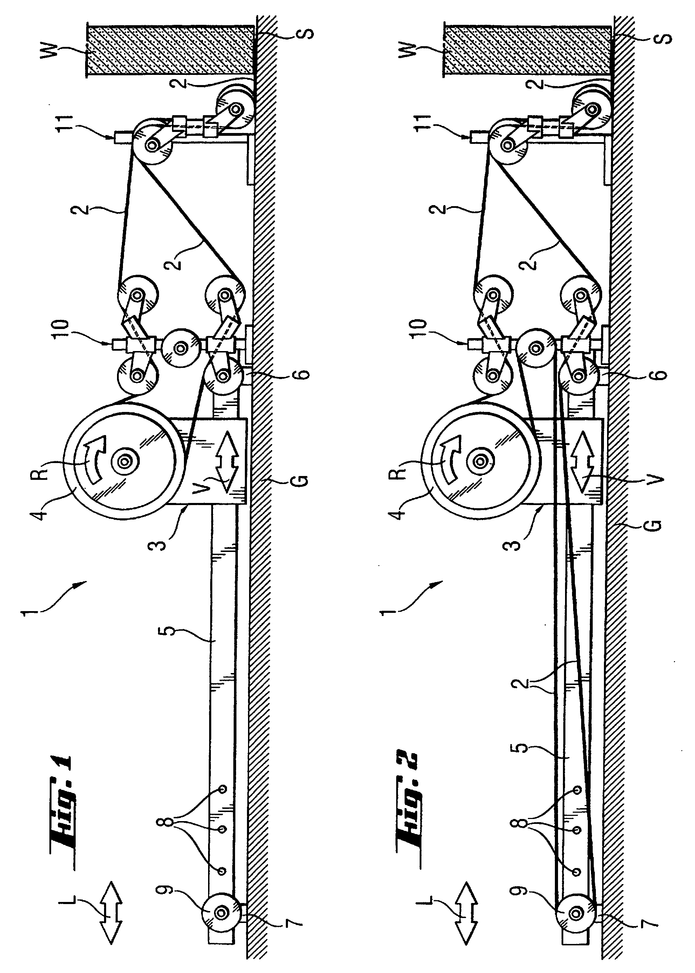

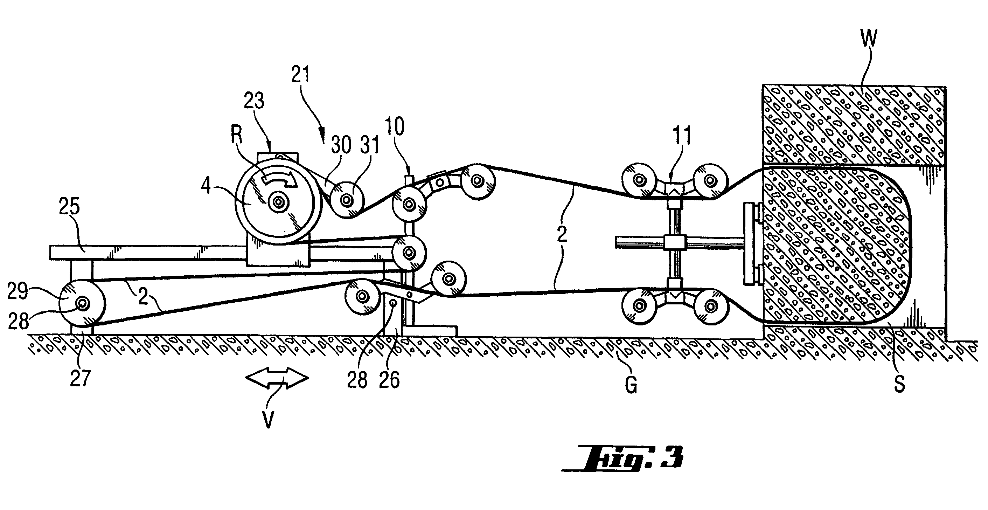

Ein erstes Ausführungsbeispiel einer erfindungsgemässen Seilsägemaschine ist in Fig. 1 und 2 gesamthaft mit dem Bezugszeichen 1 versehen. Die beispielhaft dargestellte Seilsägemaschine 1 umfasst eine Antriebseinheit 3 mit einem Treibrad 4 für ein mit abrasiven Schneidkörpem bestücktes Sägeseil 2. Als abrasive Schneidkörper kommen beispielsweise Diamantkömer enthaltende Verbundkörper zum Einsatz, die auf dem üblicherweise aus Stahl bestehenden Seil befestigt sind. Die Antriebseinheit 3 ist auf einer Führungsschiene 5 angeordnet, die sich über Führungsböcke 6, 7 am Untergrund G abstützt. Während des Betriebs ist die Antriebseinheit entlang der Längserstreckung der Führungsschiene, relativ zu einem zu bearbeitenden Werkstück W verschiebbar, wie dies durch den Doppelpfeil V angedeutet ist. Durch die Relatiwerschiebung der Antriebseinheit 3 wird der Schneidfortschritt kompensiert und wird die Seilspannung aufrecht erhalten.

Die Antriebseinheit kann ein elektrisch, pneumatisch oder vorzugsweise ein hydraulisch arbeitendes Antriebsaggregat beinhalten, wie es beispielsweise von den Wandsägesystemen der Anmelderin her bekannt ist. Das Sägeseil 2 umschlingt das im Betrieb gemäss dem Pfeil R rotierende Treibrad 4 über einen Grossteil seines Umfangs. Umlenkeinheiten 10 und 11 mit einer Anzahl vorzugsweise schwenkbarer Umlenkrollen sind zwischen der Antriebseinheit 3 und dem Werkstück angeordnet und leiten das Sägeseil 2 in die gewünschte Richtung. In der Darstellung der Fig. 1 und 2 sind bei der unmittelbar vor dem Werkstück angeordneten Umlenkeinheit 11 nur zwei Umlenkrollen für den aus dem Schnitt S im Werkstück W kommenden Teil des Sägeseils 2 gezeigt. Die paarweise vorgesehenen Umlenkrollen für das vom Treibrad 4 kommende Sägeseil 2 sind in der Darstellung verdeckt.

Gemäss der Erfindung ist die Seilsägemaschine 1 mit einer Speicherrolle 9 ausgestattet, die an dem vom Werkstück W abgewandten Endabschnitt der Führungsschiene 5 angeordnet ist. Dabei ist die Speicherrolle 9 längs der Führungsschiene 5 in verschiedenen Positionen 8 befestigbar, wie es durch den Doppelpfeil L angedeutet ist. Die Speicherrolle 9 kann, wie beispielsweise dargestellt, in diskreten Abständen verstellbar sein und in vorbereiteten Bohrungen 8 befestigbar sein. In einer nicht dargestellten, alternativen Ausführungsform der erfindungsgemässen Erfindung kann die Speicherrolle auch vorzugsweise motorisch, beispielsweise elektrisch oder hydraulisch, kontinuierlich oder quasikontinuierlich verstellbar sein. Zu diesem Zweck kann auf der Führungsschiene 5 eine zusätzliche Führungseinrichtung vorgesehen sein, entlang der die Speicherrolle 9 bei Bedarf parallel zur Längserstreckung der Führungsschiene 5 verschiebbar ist. Es versteht sich, dass die Speicherrolle 9 nach der Verschiebung in der gewünschten Position fixierbar ist, damit keine ungewollte Verschiebung entlang der Längserstreckung der Führungsschiene 5 eintreten kann. Der Verstellbereich der Speicherrolle 9 erstreckt sich etwa über das rückwärtige Drittel der Führungsschiene 5. Auf diese Weise kann der Speicherbereich der Seilsägemaschine 9 ausreichend gut an die Länge des verwendeten Sägeseils 2 angepasst werden.

Durch die Anordnung einer Speicherrolle 9 entlang der Längserstreckung der Führungsschiene 5 ist die Länge des Sägeseils auf sehr einfache Weise gemäss den Erfordernissen des zu bearbeitenden Werkstücks W einstellbar. Beispielsweise ist für einen horizontalen Schnitt vielfach eine geringere nutzbare Seillänge erforderlich als für einen senkrechten Schnitt in einem Werkstück. Indem die Speicherrolle 9 in den Führungspfad des Sägeseils 2 miteinbezogen wird, wie in Fig. 2 angedeutet ist, kann ein längeres Sägeseil 2 eingesetzt werden. Durch die erfindungsgemässe Ausbildung der Seilsägemaschine 1 ist es mithin nicht mehr erforderlich, bei Schnitten, die eine grössere nutzbare Seillänge benötigen, das Sägeseil zu wechseln bzw. das Sägeseil 2 in einer aufwendigen Prozedur zu verlängern. Das Sägeseil 2 wird vielmehr einfach von der Seilspeicherrolle 9 abgenommen und gemäss der Darstellung in Fig. 1 durch die Seilsägemaschine 1 geführt. Durch das Vorsehen der Seilspeicherrolle 9 kann beispielsweise bei einer Länge der Führungsschiene 5 von 2 m die nutzbare Seillänge von üblicherweise etwa 3 m auf etwa 7 m gesteigert werden. Dies erhöht die Einsetzbarkeit der erfindungsgemässen Seilsägemaschine 1.

Fig. 3 zeigt ein zweites Ausführungsbeispiel einer erfindungsgemäss ausgestatteten Seilsägemaschine 21. Bei der Antriebseinheit der Seilsägemaschine 21 handelt es sich insbesondere um einen Sägekopf 23 einer Wandsäge, wie sie beispielsweise von der Anmelderin vertrieben wird. Anstelle eines Sägeblatts ist das Treibrad 4 für das Sägeseil 2 an den Sägekopf 23 angeflanscht. Der Sägekopf 23 ist auf einer Führungsschiene 25 gegenüber dem zu bearbeitenden Werkstück W verschiebbar, wie wiederum durch den Doppelpfeil V angedeutet ist. Die Führungsschiene 25 entspricht dabei beispielsweise den Führungsschienen, wie sie auch bei konventionellen Wandsägen der Anmelderin zum Einsatz kommen. Die Führungsschiene 25 stützt sich über einen vorderen und einen hinteren Schienenbock 26 bzw. 27 gegenüber dem Untergrund G ab. Das vom gemäss dem Pfeil R rotierenden Treibrad angetriebene Sägeseil 2 ist über Umlenkeinrichtungen 10 und 11 mit vorzugsweise verschwenkbaren Umlenkrollen zum zu bearbeitenden Werkstück W geführt. Am Sägekopf 23 ist ein Seilspanner angeordnet, der einen federbelasteten Arm 30 und eine am Arm 30 angeordnete Rolle 31 umfasst. Der Seilspanner 30, 31 gleicht im Betrieb Schwankungen der Vorschubgeschwindigkeit des Sägekopfs 23 auf der Führungsschiene 25 aus und hält die erforderliche Vorspannung des Sägeseils 2 aufrecht.

Wie bei dem anhand der schematischen Fig. 1 und 2 erläuterten ersten Ausführungsbeispiel der Seilsägemaschine ist eine Speicherrolle 29 vorgesehen, die an dem vom Werkstück W abgewandten Endabschnitt der Führungsschiene 25 angeordnet ist. Zum Unterschied von dem zuvor beschriebenen Ausführungsbeispiel ist die Speicherrolle 29 nicht direkt an der Führungsschiene 25 vorgesehen, sondern bildet sie eine Einheit mit dem hinteren Schienenbock 27. Dabei kann die Speicherrolle 29 permanent mit dem hinteren Schienenbock 27 verbunden sein. Vorzugsweise sind jedoch an den identisch ausgebildeten Schienenböcken 26, 27 Bohrungen 28 für die Achse der Speicherrolle 29 vorgesehen. Dadurch muss beim Aufbau der Seilsägemaschine 21 nicht mehr auf die Anordnung der Schienenböcke 26, 27 geachtet werden. Die Speicherrolle 29 kann erst nach der Montage der Führungsschiene 25 auf den Schienenböcken 26, 27 am hinteren Schienenbock 27 montiert werden. Bei einer starren Montage der Speicherrolle 29 ist darauf zu achten, dass sie parallel zur Längserstreckung der Führungsschiene 25 ausgerichtet ist und vorzugsweise mit dem Treibrad 4 fluchtet. In einer nicht näher dargestellten Abwandlung der Erfindung kann die Speicherrolle auch schwenkbar angeordnet sein. In einer gleichfalls nicht dargestellten Variante der Erfindung ist die Führungsschiene auf verlängerten Schienenböcken erhöht angeordnet. Die Speicherrolle ist wiederum an einem konventionellen Schienenbock angeordnet, der im rückwärtigen Abschnitt der Führungsschiene angeordnet wird. Der zusätzliche Schienenbock ist entlang der Führungsschiene verschiebbar und in verschiedenen Positionen durch Klemmung an der Führungsschiene fixierbar. Dadurch ist der Speicherbereich der Seilsägemaschine veränderbar und an die jeweilige Länge des verwendeten Sägeseils anpassbar.

## Patentansprüche

1. Seilsägemaschine zur schneidenden Bearbeitung von Werkstücken aus Beton, Mauerwerk, Gestein oder dergleichen mit einem mit abrasiven Schneidkörpern bestückten Sägeseil (2), umfassend eine Antriebseinheit (3; 23), die entlang einer Führungsschiene (5; 25) oder dergleichen Führungseinrichtung relativ zum bearbeiteten Werkstück (W) verschiebbar angeordnet ist, und ein der Antriebseinheit (3; 23) zugeordnetes Treibrad (4) zum Antrieb des in einer geschlossenen Schleife geführten Sägeseils (2), wobei das Sägeseil (2) das Treibrad (4) über einen Grossteil seines Umfangs umschlingt und sich vom Treibrad (4) über zwischengeschaltete Umlenkrollen (10, 11) zum Werkstück (W) erstreckt, wobei an dem vom Werkstück (W) abgewandten Endabschnitt der Führungsschiene (5; 25) eine Seilspeicherrolle (9; 29) angeordnet ist, bei deren Miteinbezug in den Führungspfad des Sägeseils (2) die sich vom Treibrad (4) zum Werkstück (W) erstreckende Seillänge verkürzbar ist, **dadurch gekennzeichnet, dass** die Seilspeicherrolle (9; 29) entlang der Längserstreckung der Führungsschiene (5; 25) in unterschiedlichen Positionen (8) befestigbar ist

2. Seilsägemaschine nach Anspruch 1, **dadurch gekennzeichnet, dass** die Seilspeicherrolle (9) elektrisch oder hydraulisch kontinuierlich entlang der Führungsschiene (5) verschiebbar ist.

3. Seilsägemaschine nach einem der vorangehenden Ansprüche, **dadurch gekennzeichnet, dass** die Seilspeicherrolle an einem Schienenbock montiert ist, der an der Führungsschiene befestigbar ist und dessen Abstand zur Antriebseinheit bei Bedarf verstellbar ist.

4. Seilsägemaschine nach Anspruch 1, **dadurch gekennzeichnet, dass** die Führungsschiene (5; 25) auf wenigstens zwei Schienenböcken (6, 7; 26, 27) gelagert ist, wobei die Seilspeicherrolle (29) an einem der Schienenböcke (27) angeordnet ist.

5. Seilsägemaschine nach Anspruch 1 - 2, **dadurch gekennzeichnet, dass** die Seilspeicherrolle (9; 29) schwenkbar angeordnet ist

6. Seilsägemaschine nach einem der vorangehenden Ansprüche, **dadurch gekennzeichnet, dass** der von den Umlenkrollen (10, 11) zur Seilspeicherrolle (9; 29) führende Sägeseilabschnitt, unabhängig von der jeweiligen. Position der Antriebseinheit (3; 23) auf der Führungsschiene ( 5; 25), seine relative Ausrichtung zur Führungsschiene (5; 25) im wesentlichen beibehält.

7. Seilsägemaschine nach einem der vorangehenden Ansprüche, **dadurch gekennzeichnet, dass** die Antriebseinheit der Sägekopf (23) einer Wandsägeeinrichtung ist, wobei das Treibrad (4) an Stelle eines Sägeblatts an den Sägekopf (23) angeflanscht ist.

## Claims

1. Wire saw for cutting workpieces of concrete, brickwork, rock and the like, with a saw wire (2) which is fitted with abrasive cutting elements, comprising a drive unit (3; 23) arranged to be displaceable along a guide rail (5; 25) or the like guiding device relative to a workpiece (W) to be processed, and a drive wheel (4) associated with the drive unit (3; 23) for driving a saw wire (2) which is guided in a closed loop, and the saw wire (2) embraces the drive wheel (4) over a large portion of its periphery and extends from the drive wheel (4) via intermediate diverting rollers (10, 11) to the workpiece (W), and at the end section of the guide rail (5; 25) facing away from the workpiece (W) is arranged a wire storage roller (9; 29) by means of which the wire length extending from the drive wheel (4) to the workpiece (W) can be shortened by inclusion into the guide path of the saw wire (2), **characterised in that** the wire storage roller (9; 29) can be fixed along the longitudinal extent of the guide rail (5; 25) in different positions (8).

2. Wire saw according to Claim 1, **characterised in that** the wire storage roller (9) is electrically or hydraulically continously displaceable along the guide rail (5).

3. Wire saw according to one of the above claims, **characterised in that** the wire storage roller is mounted on a rail frame which is mountable onto the guide rail and the distance of which to the drive unit is adjustable if so required.

4. Wire saw according to Claim 1, **characterised in that** the guide rail (5; 25) is mounted on at least two rail frames (6, 7; 26, 27), and the wire storage roller (29) is arranged on one of the rail frames (27).

5. Wire saw according to Claim 1 - 2, **characterised in that** the wire storage roller (9; 29) is arranged to be pivotal.

6. Wire saw machine according to one of the above claims, **characterised in that** the saw wire section extending from the diverting rollers (10, 11) to the wire storage roller (9; 29) substantially maintains its relative alignment to the guide rail (5; 25) independently from a respective position of the drive unit (3; 23) on the guide rail (5; 25).

7. Wire saw according to one of the above claims, **characterised in that** the drive unit is the saw head (23) of a wall sawing device, and the drive wheel (4) is flanged onto the saw head (23) in place of a saw blade.

## Revendications

1. Machine de sciage à câble pour la découpe de pièces en béton, maçonnerie, roche ou analogue, avec un câble de scie (2) garni de corps de coupe abrasifs, comprenant une unité d'entraînement (3 ; 23) qui est montée avec la possibilité de se déplacer par rapport à la pièce travaillée (W) le long d'un rail de guidage (5 ; 25) ou d'un dispositif de guidage identique, et une roue d'entraînement (4) associée à l'unité d'entraînement (3 ; 23) pour l'entraînement du câble de scie (2) guidé en boucle fermée, le câble de scie (2) entourant la roue d'entraînement (4) sur une grande partie de la circonférence de celle-ci et s'étendant de la roue d'entraînement (4) à la pièce (W) en passant par des poulies de renvoi intercalées (10, 11), sur la portion extrême du rail de guidage (5, 25) située à l'opposé de la pièce (W) étant disposée une bobine de réserve de câble (9 ; 29) qui, lorsqu'elle est incluse dans le trajet de guidage du câble de scie (2), permet de raccourcir la longueur de câble s'étendant de la roue d'entraînement (4) à la pièce (W), **caractérisée en ce que** la bobine de réserve de câble (9 ; 29) peut être fixée dans divers emplacements (8) le long de l'extension longitudinale du rail de guidage (5 ; 25).

2. Machine de sciage à câble selon la revendication 1, **caractérisée en ce que** la bobine de réserve de câble (9) peut être déplacée en continu, électriquement ou hydrauliquement, le long du rail de guidage (5).

3. Machine de sciage à câble selon une des revendications précédentes, **caractérisée en ce que** la bobine de réserve de câble est montée sur un support de rail qui peut être fixé au rail de guidage et dont la distance par rapport à l'unité d'entraînement est réglable si nécessaire.

4. Machine de sciage à câble selon la revendication 1, **caractérisée en ce que** le rail de guidage (5 ; 25) est monté sur au moins deux supports de rail (6, 7 ; 26, 27), la bobine de réserve de câble (29) étant disposée sur un des supports de rail (27).

5. Machine de sciage à câble selon les revendications 1 et 2, **caractérisée en ce que** la bobine de réserve de câble (9 ; 29) est montée basculante.

6. Machine de sciage à câble selon une des revendications précédentes, **caractérisée en ce que** la portion de câble de scie menant des poulies de renvoi (10, 11) à la bobine de réserve de câble (9 ; 29) conserve pour l'essentiel son orientation relative par rapport au rail de guidage (5 ; 25), quelle que soit la position de l'unité d'entraînement (3 ; 23) sur le rail de guidage (5 ; 25).

7. Machine de sciage à câble selon une des revendications précédentes, **caractérisée en ce que** l'unité d'entraînement est la tête de scie (23) d'un dispositif de scie à mur, la roue d'entraînement (4) étant montée sur la tête de scie (23) à la place d'une lame de scie.
